# EUROPEAN PATENT APPLICATION

(11) **EP 0 985 928 A1**
(43) Date of publication of application: **15.03.2000**
(21) Application number: 99202915.7
(22) Date of filing: 07.09.1999
(51) Int. Cl.: G01N 30/60

(54) **Assembly for placing a capillary gas chromatography column in a gas chromatograph**

(30) Priority: 08.09.1998 NL 1010027
(71) Applicant: SGT Exploitatie B.V., 4338 PD Middelburg (NL)
(72) Inventor: Van der Maas, Marinus Frans, 4341 LC Arnemuiden (NL); Van Deursen, Johannes Martinus Petrus, 4335 BE Middelburg (NL)
(74) Representative: Ottevangers, Sietse Ulbe

(57) **Abstract**

Assembly for placing a capillary gas chromatography column in a gas chromatograph, for forming a connection of a first end of the capillary gas chromatography column with an injector of the gas chromatograph and for forming a connection of a second end of the capillary gas chromatography column with a detector of the gas chromatograph, the assembly including a first and a second rapid-coupling sealing connection and a first and a second capillary connecting duct, the first rapid-coupling sealing connection being intended for connecting therewith an input end of a capillary gas chromatography column, and the second rapid-coupling sealing connection being intended for connecting therewith an output end of a capillary gas chromatography column, while the first capillary connecting duct connects the first rapid-coupling sealing connection with the injector, and the second capillary connecting duct connects the second rapid-coupling sealing connection with the detector.

## Description

This invention relates to an assembly for placing a capillary gas chromatography column in a gas chromatograph for forming a connection of an input end of the capillary gas chromatography column with an injector of the gas chromatograph and for forming a connection of an output end of the capillary gas chromatography column with a detector of the gas chromatograph.

The known gas chromatograph comprises an oven with an injector and a detector which are fitted on the oven wall. In the oven chamber, a gas chromatography column is placed. The gas chromatography column comprises a capillary tube from glass or like material, which tube is provided with a coating which reduces the fragility of the tube. Such gas chromatography columns must be replaced regularly, for instance because measuring one mixture requires a different column than is used for measurement on another mixture. Replacing gas chromatography columns is therefore an operation that takes place regularly. When placing a gas chromatography column, one end thereof is connected with an injector and the other end with a detector. The ends of the gas chromatography column are required to reach into the injector and detector chamber, respectively, over a prescribed distance. Accordingly, the making of the connection must be performed in a highly accurate manner and in the case of the known gas chromatograph can only be carried out by skilled analysts.

Making the connection can be done by means of a clamp fitting which comprises at least a ferrule and a nut, or by means of a so-called rapid-coupling sealing connection as described in EP-A-0,841,564.

Since the injector and the detector are fitted on the oven wall, the clamp fittings or the rapid-coupling sealing connections are disposed in the oven space. The analyst, when placing the gas chromatography column, must reach with his hands into the oven chamber, which is often still hot. Often, the gas chromatograph is provided with more than one gas chromatography column and the accessibility of at least some of the clamp fittings or rapid-coupling sealing connections is poor. In particular, replacing a gas chromatography column which has been mounted by means of clamp fittings fitted on the oven wall and which requires the connection to be fixed with an open-end spanner is therefore particularly cumbersome.

With the rapid-coupling sealing connections described in EP-A-0,841,564, this problem is already largely resolved. Unfortunately, in the market, there exist some prejudices regarding the operation of the rapid-coupling sealing connections described in that publication. Thus, some buyers are afraid that the direct engagement of the gas chromatography column by the sealing element present in the known rapid-coupling sealing connection may lead to damage of the gas chromatography column. Regarding the known rapid-coupling sealing connection, there moreover exists in the market the prejudice that pushing the gas chromatography column into the narrowing of the coupling piece sometimes entails such great forces that the end of the capillary gas chromatography column breaks. This might create a non-sealing connection between the coupling piece provided in the rapid-coupling sealing connection and the gas chromatography column, so that not all substances introduced into the injector would be led via the gas chromatography column to the detector. Moreover, the risk of leakage might arise, which could likewise disturb the measurements.

The object of the invention is to provide an assembly for placing a capillary gas chromatography column in a gas chromatograph, of the type described in the opening paragraph hereof, without the assembly having the above-described disadvantages.

To that end, the invention provides an assembly comprising a first and a second rapid-coupling sealing connection and a first and a second capillary connecting duct, the first rapid-coupling sealing connection being intended for connecting therewith an input end of the capillary gas chromatography column, and the second rapid-coupling sealing connection being intended for connecting therewith an output end of a capillary gas chromatography column, while the first capillary connecting duct connects the first rapid-coupling sealing connection with the injector, and the second capillary connecting duct connects the second rapid-coupling sealing connection with the detector.

The particular advantage of this assembly is that it can be utilized in the existing gas chromatographs. The rapid-coupling sealing connections can be provided in an easily accessible place, for instance on a frame connected with the oven door of the gas chromatograph, or on a drawer adapted for riding out of the oven space. The capillary connecting ducts, with the aid of a known clamp fitting at least comprising a ferrule and a nut, can be connected, by a first end thereof, with the injector and the detector, respectively. This connection only needs to be effected very sporadically since the connecting duct only needs to be replaced when broken. Placing the first connecting duct with the injector and the second connecting duct with the detector must obviously be done by a skilled analyst since this requires particular skills. However, since this placement only needs to be performed once or only rarely so, this is not objectionable. What is more, even for this aspect a solution is described hereinafter in this application. Heretofore, the skilled analyst had to be called upon each time a gas chromatography column was to be replaced, which was objectionable since the gas chromatography columns are to be replaced very frequently. The other end of the capillary connecting ducts is connected with a connecting duct insertion end of a rapid-coupling sealing connection. The description of this connection follows later. By presently giving the connecting duct a length such that the rapid-coupling sealing connections can be moved out of the oven, without the connecting duct needing to be uncoupled from the rapid-coupling sealing connection in question and the detector and injector, respectively, it is achieved that the connection between the rapid-coupling sealing connection and the gas chromatography column can be effected at an easily accessible place outside the oven.

To prevent an end of the gas chromatography column from being damaged during placement, the assembly is characterized, according to a further elaboration of the invention, in that each rapid-coupling sealing connection comprises a housing having a housing bore, in which housing bore a coupling piece is received, which is provided with a coupling piece bore which is concentric with respect to the housing bore, while in the coupling piece bore a narrowing is provided, the transition in diameter from the coupling piece bore to the narrowing being continuous, viewed from both sides of the narrowing, the diameter of the coupling piece bore being greater than the diameter of the capillary gas chromatography column and a said capillary connecting duct, while the diameter of the narrowing is smaller than the outside diameter of a capillary gas chromatography column and a said capillary connecting duct, the coupling piece being arranged for movement in axial direction, and each rapid-coupling sealing connection comprising a spring element, which pushes the coupling piece in the direction of a gas chromatography column insertion end of the housing into an extreme position and which, under the influence of a force exerted on the coupling piece, allows displacement of the coupling piece in axial direction.

Due to the possibility of axial displacement of the coupling piece against the spring action, the pushing force by which the gas chromatography column is pressed into the coupling piece is limited, since this pushing force is not greater than the spring force which the spring exerts on the coupling piece when it moves in axial direction. The chance of damage to the column ends is thus reduced to a minimum.

The invention further relates to a gas chromatograph comprising a housing with an oven chamber, the housing comprising a door closing off an opening in the housing which provides access to the oven chamber, the gas chromatograph further comprising at least one injector and at least one detector, which gas chromatograph is characterized by at least one assembly according to the invention. According to a further elaboration of the invention, it is preferred that the rapid-coupling sealing connections are fitted on a frame which is movable out of the oven chamber. What is thus accomplished is that replacing gas chromatography columns is particularly simple without the person who is to replace the gas chromatography column needing to reach into the oven chamber with his hands. Moreover, what is accomplished as an additional advantage of moving the column and the rapid-coupling sealing connections out of the entire oven chamber is that they cool rapidly and can soon be touched by hand.

The invention further relates to a capillary connecting duct intended for an assembly according to the invention, which capillary connecting duct comprises a ferrule fixedly mounted at a defined distance from an end of the capillary connecting duct. As the ferrule is fixedly mounted at a defined distance from an end of the capillary connecting duct, even the connection with the detector and injector, respectively, can be made by a comparatively unskilled person, since the length over which the connecting duct reaches into the injector and detector chamber, respectively, is fixed due to the fixed position of the ferrule on the connecting duct. Preferably, the capillary connecting duct according to the invention is packaged in a gas-tight glass tube having closed ends, which glass tube is provided with a breaking edge along which the tube can be controllably broken. A so packaged capillary connecting duct can be simply transported, unpacked and mounted without involving any chance of damage to the capillary connecting duct and without requiring any particular skills and training for mounting the capillary connecting duct.

Further elaborations of the invention are described in the dependent claims and will hereinafter be further clarified on the basis of an exemplary embodiment, with reference to the drawings.
Fig. 1 shows a perspective view of a known gas chromatograph which is utilized in practice;
Fig. 2 shows the interior of the oven chamber of the known gas chromatograph represented in Fig. 1;
Fig. 3 shows the constituent parts of a rapid-coupling sealing connection which is part of an assembly according to the invention;
Fig. 4 shows a sectional view of the rapid-coupling sealing connection of Fig. 3, in assembled condition;
Fig. 5 shows a front view of the rapid-coupling sealing connection represented in section in Fig. 4;
Fig. 6 shows a similar section to that shown in Fig. 4, wherein a capillary connecting duct and an end of a gas chromatography column are mounted;
Fig. 7 shows a bottom view of the rapid-coupling sealing connection as represented in Fig. 6;
Fig. 8 shows a left-hand side of the housing of the rapid-coupling sealing connection represented in front view in Fig. 5;
Fig. 9 shows a frame carrying four rapid-coupling sealing connections;
Fig. 10 shows a top plan view of the frame represented in Fig. 9; and
Fig. 11 shows a side elevation of a packaged capillary connecting duct comprising a ferrule, fixedly mounted thereon, with nut.

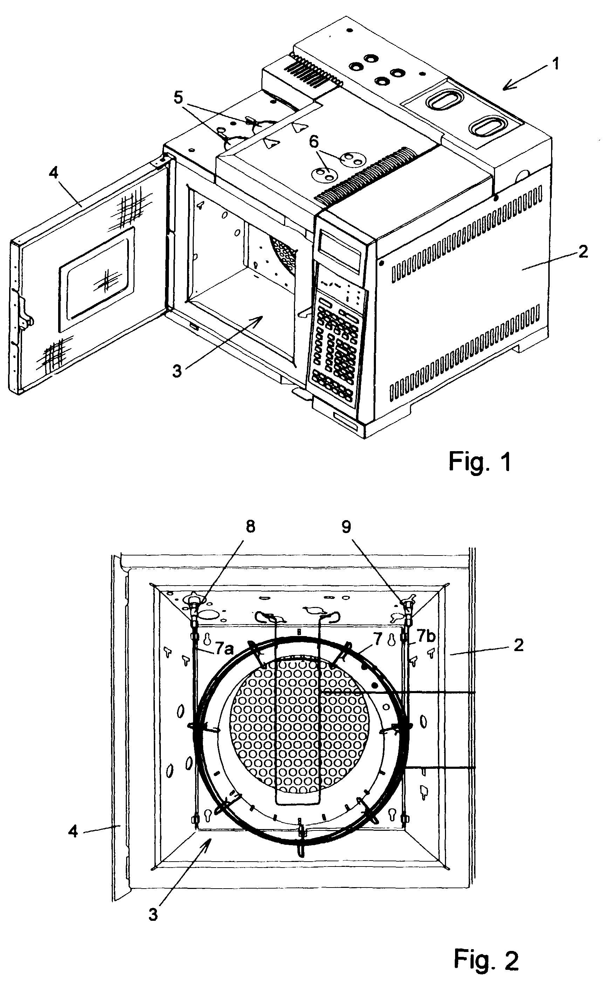

Fig. 1 shows a gas chromatograph according to the prior art. Such a gas chromatograph 1 comprises a housing 2 with an oven chamber 3. The housing 2 comprises a door 4 which closes off an opening in the housing 2, which opening provides access to the oven chamber 3. In the top wall of the housing 2, the gas chromatograph 1 is provided with two connections 5 for injectors and two connections 6 for detectors. Disposed in the oven chamber 3 are one or more gas chromatography columns 7. Such gas chromatography columns 7 are designed as glass capillary tubes having a considerable length. The capillary gas chromatography column 7 is provided with a coating preventing the capillary tube from breaking when being bent. Accordingly, the gas chromatography column is wound up into a number of turns, so that it is receivable within a relatively compact oven chamber 3. The input end 7a of the capillary gas chromatography column 7 is connected via a clamp fitting 8 with a detector 5. The output end 7b of the capillary gas chromatography column 7 is connected via a clamp fitting 9 with a detector 6. The clamp fittings 8 and 9 are connected with the top wall of the housing 2 of the gas chromatograph 1. In the known gas chromatograph 1, the replacement of the gas chromatography column 7, which is to be performed regularly, requires reaching with a tool into the oven chamber 3 to loosen the clamp fittings 8 and 9. In particular when more than one gas chromatography column 7 is present in the oven chamber 3, this can be particularly laborious and time-consuming. Moreover, when attaching the input end and the output end 7a and 7b, respectively, of the gas chromatography column 7, particularly accurate care must be taken that these ends 7a, 7b reach by the proper length into the injector and detector chamber, respectively. If such is not the case, this can lead to disturbance of the measurements.

The invention provides an assembly for placing a capillary gas chromatography column 7 in a gas chromatograph 1, by which replacing the gas chromatography column 7 is considerably simplified. The assembly can moreover be utilized in the known gas chromatographs. The assembly comprises a first and a second rapid-coupling sealing connection 20, 20' and comprises a first and a second capillary connecting duct 11, 11'. The first rapid-coupling sealing connection 20 is intended for connecting therewith an input end 7a of the capillary gas chromatography column 7. The second rapid-coupling sealing connection 20' is intended for connecting therewith an output end 7b of the capillary gas chromatography column 7. The first capillary connecting duct 11 is intended for connecting the first rapid-coupling sealing connection 20 with the injector 5 and the second capillary connecting duct 11' is intended for connecting the second rapid-coupling sealing connection 20' with the detector 6.

As a result of the presence of the capillary connecting ducts 11, 11', it is possible to mount the rapid-coupling sealing connections 20, 20' at an easily accessible place, for instance on the inside of the door 4. The capillary connecting ducts 11, 11' can be connected by a first end thereof with the clamp fittings 8, 9 which are provided in the top wall of the housing 2 of the gas chromatograph 1. This connection needs to be undone only in exceptional cases, for instance when the connecting duct is broken. The other ends of the capillary connecting ducts 11, 11' are attached to the rapid-coupling sealing connections 20 and 20', respectively, viz. to the connecting duct insertion end 21b thereof.

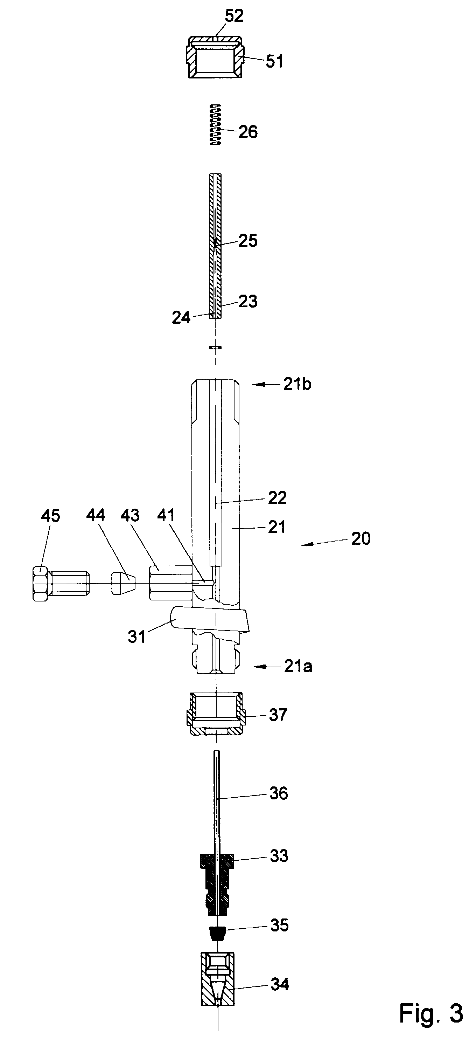

Presently, an exemplary embodiment of a rapid-coupling sealing connection 20 will be described with reference to Figs. 3-8.

Each rapid-coupling sealing connection 20 comprises a housing 21 with a housing bore 22. Received in the housing bore 22 is a coupling piece 23 provided with a coupling piece bore 24 concentric relative to the housing bore 22. In the coupling piece bore 24, a narrowing 25 is provided. The transition in diameter of the coupling piece bore 24 towards the narrowing 25 is continuous, viewed from either side of the narrowing 25. The diameter of the coupling piece bore 24 is greater than the diameter of the capillary gas chromatography column 7 and a capillary connecting duct 11. The diameter of the narrowing 25 is smaller than the outside diameter of a capillary gas chromatography column 7 and a capillary connecting duct 11. The coupling piece 23 is arranged for displacement in axial direction. The rapid-coupling sealing connection 20 comprises a spring element 26 which pushes the coupling piece 23 in the direction of a gas chromatography column insertion end 21a of the housing 21 into an extreme position and which, under the influence of a force exerted by the input end 7a or output end 7b of the gas chromatography column 7 on the coupling piece 23, allows displacement of the coupling piece 23 in axial direction. In the present exemplary embodiment, the coupling piece 23 and the spring element 26 are received in a chamber and locked therein by a lock nut 51 in which a bore 52 is provided for allowing the capillary connecting duct 11 to pass. Should the coupling piece 23 ever be damaged, it can be readily displaced by loosening the lock nut 51.

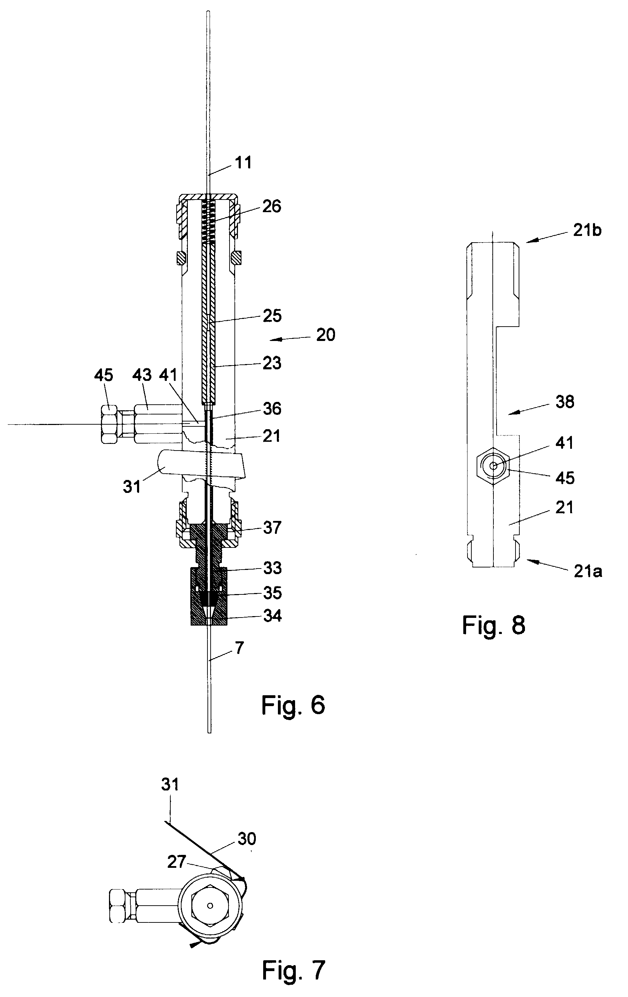

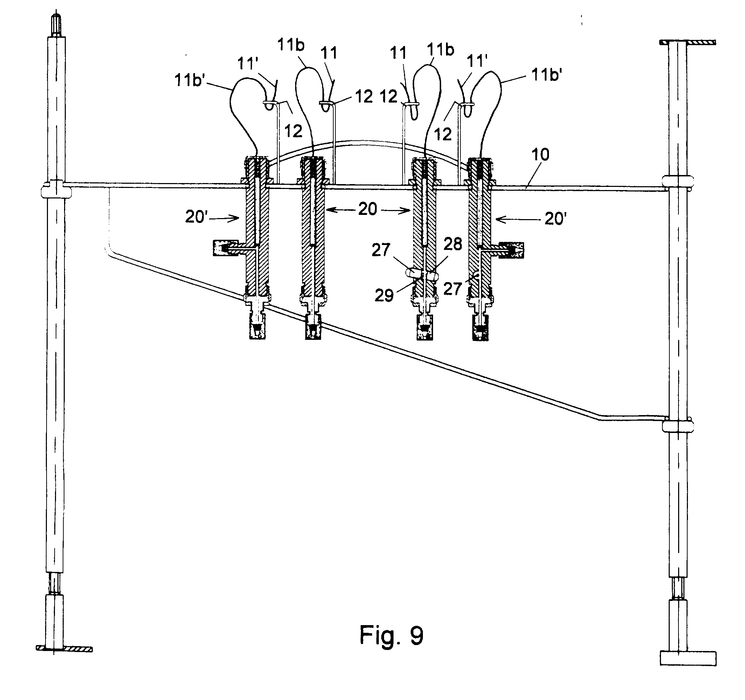

The rapid-coupling sealing connection 20, on a side thereof which, relative to the coupling piece 23, is proximal to the gas chromatography column insertion end 21a of the housing 21, comprises a sealing element 27 which is slidably received in a sealing element bore 28. The sealing element 27 is clearly visible in Fig. 7 and in Fig. 9. It is clear that the sealing element bore 28 intersects the housing bore 22. The sealing element 27 is provided with a recess 29. The sealing element 27 is arranged for assuming a sealing position in which the housing bore 22 is closed off and for assuming a connecting position in which the recess 29 of the sealing element 27 is in line with the housing bore 22, so that the housing bore 22 is not closed off. The sealing element 27 is biased into the sealing position with a spring 30. Moreover, operating means 31 are provided for bringing the sealing element 27 from the sealing position into the connecting position. These operating means 31 are clearly visible in Figs. 3-7 and, in the present exemplary embodiment, are designed in combination with the spring 30 in the form of a leaf spring.

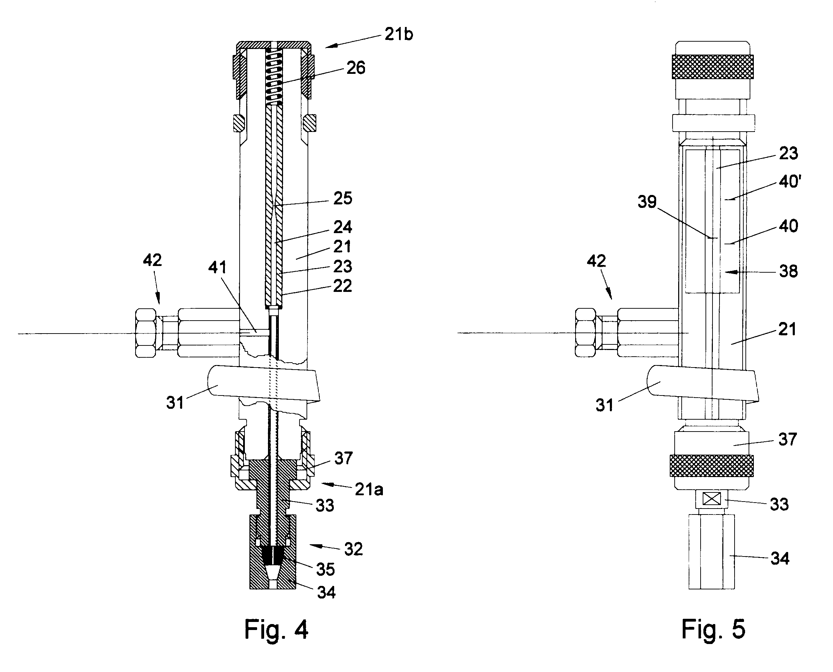

Each rapid-coupling sealing connection 20 comprises, adjacent the gas chromatography column insertion end 21a, a clamp fitting 32 comprising a fitting part 33, a nut 34 and a ferrule 35. The fitting part 33, the nut 34 and the ferrule 35 are each provided with a bore which in mounted condition is concentric relative to the housing bore 22. The fitting part 33 further comprises a tube part 36, which in mounted condition extends into the housing bore 22 and is engaged by the sealing element 27. The tube part 36 can be made, for instance, from metal. Further, the gas chromatography column insertion end 21a comprises a lock nut 37 for locking a clamp fitting 32 connected with the housing 21 by the sealing element 27. As is clearly visible in Figs. 5 and 8, the housing 21 comprises a window 38 through which the coupling piece 23 is visible, so that the axial displacement of the coupling piece 23 during placement of a gas chromatography column 7 is visible. Both the coupling piece 23 and the housing 21 are provided with markings 39 and 40, 40', respectively, which indicate whether in mounting the gas chromatography column 7 sufficient axial displacement of the coupling piece 23 has occurred.

Preferably, in the housing 21 a rinsing bore 41 is provided which terminates in the housing bore 22. Adjacent a free connecting end of the rinsing bore 41, a clamp fitting 42 is provided, which clamp fitting 42 comprises a fitting part 43, a ferrule 44 and a nut 45. The rinsing bore 41 is intended in particular for supplying rinsing gas, which prevents ambient air from entering the housing bore 22.

As is clearly represented in Fig. 9, each rapid-coupling sealing connection 20, adjacent a connecting duct insertion end 21b thereof, comprises a connecting duct retaining element 12. This retaining element 12 is arranged to pass a flexibly designed capillary connecting duct 11 via a bend llb of a desired contour to the connecting duct insertion end 21b, such that the free end lla of the connecting duct 11 that extends into the housing bore 22 is pushed with a force defined by the flexibility of the connecting duct 11 and the bend contour lla, into the narrowing 25 of the coupling piece 23. What is thus accomplished is that even upon axial displacement of the coupling piece 23, the force with which the end 11a of the connecting duct 11 is pushed into the narrowing 25 of the coupling piece 23 remains substantially constant. Damage to the end lla of the capillary connecting duct 11 is thereby prevented, while yet a sufficient pressure force is guaranteed to maintain a sealing connection between the connecting duct 11 and the coupling piece 23.

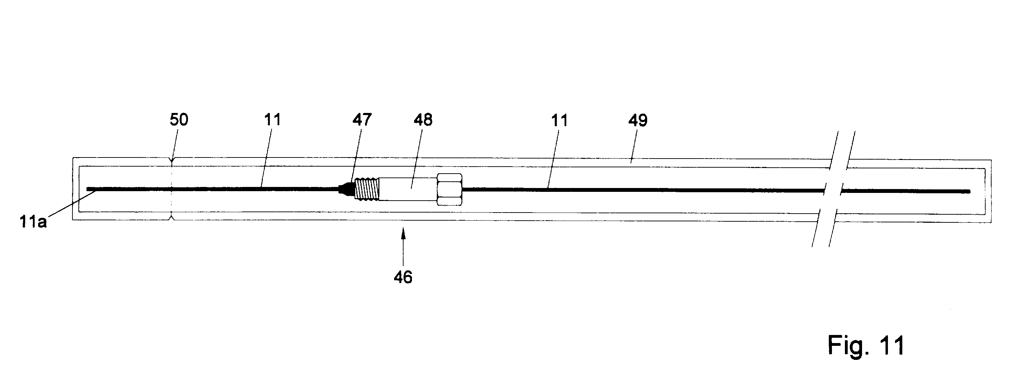

Preferably, each connecting duct 11, 11', adjacent the end to be connected with the injector 5 or the detector 6, comprises at least a ferrule 47 and optionally a nut 48. Such a connecting duct 11 is represented separately in Fig. 11. The capillary connecting duct 11 shown there is intended for an assembly according to the invention and comprises a ferrule 47 which is fixedly mounted at a defined distance from an end 11a of the capillary connecting duct 11. As the ferrule 47 is located at a defined distance from the end lla of the capillary connecting duct 11, that end can be connected with the clamp fitting 8 or 9 in the oven chamber 3 of the gas chromatograph 1 by an unskilled person, that is, someone other than a skilled analyst. This is because the distance by which the end lla extends into the detector or injector chamber is accurately defined in that the distance of the ferrule 47 which is fixedly mounted on the capillary connecting duct 11 is fixed.

Preferably, the connecting duct 11 is packaged in a gas-tight glass tube 49 with closed ends, which glass tube 49 is provided with a breaking edge 50 along which the tube 49 can be controllably broken.

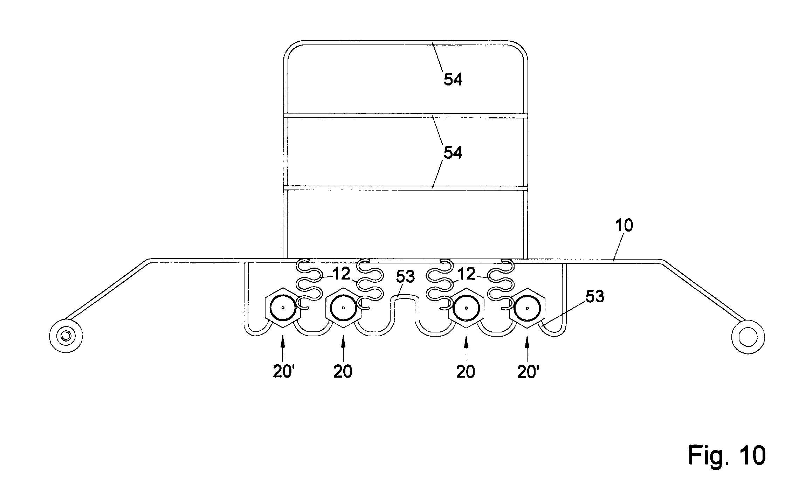

Figs. 9 and 10 clearly show an example of the manner in which the rapid-coupling sealing connections 20, 20' can be arranged on a frame 10 which is movable out of the oven chamber 3. The present frame 10 is intended to be connected with the oven door 4. In addition to holders 53 for the rapid-coupling sealing connections 20, 20', the frame 10 further comprises holders 54 for connecting the wound-up gas chromatography column 7 therewith. Accordingly, upon opening of the oven door 4, the gas chromatography columns 7 and the rapid-coupling sealing connections 20, 20' move out of the oven chamber 3. As a result, a rapid cooling occurs, so that the gas chromatography columns 7 can be rapidly replaced. When replacing a column, only the lock nut 37 needs to be manually loosened, whereafter the operating means 31 can be operated and the clamp fitting 32 can be pulled from the rapid-coupling sealing connection 20. It is therefore not necessary to loosen the clamp fitting 32 for replacing a gas chromatography column. A gas chromatography column 7 which can be used again at a later stage will continue to carry a clamp fitting both at the input end 7a and the output end 7b. When fitting such a gas chromatography column 7 again, only the operating means 31 needs to be operated, so that the tube part 36 can be slid completely into the housing bore 22. When the fitting part 33 lies against the underside of the housing 21, also the input end 7a or the output end 7b will thereby have been pressed into the narrowing 25 of the coupling piece 23. The lock nut 37 only needs to be tightened to lock the connection effected through the engagement of the tube part 36 by the sealing element 27. Only when a new gas chromatography column 7 is to be placed, that is, a gas chromatography column 7 not having a clamp fitting 32 fitted on the input end 7a and the output end 7b yet, the procedure will be slightly different. In that case, a clamp fitting 32 is connected with the housing 21 through engagement of the tube part 36 by the sealing element 27. Further, the lock nut 37 will be tightened, so that a fixed connection is effected. The nut 34 and the ferrule 35 are loosened and slipped over an end 7a, 7b of the gas chromatography column. Thereupon, the end 7a, 7b of the gas chromatography column is slid through the bore in the fitting part 33 via the tube part 36 into the bore 24 of the coupling piece 23. The end 7a, 7b is pushed further until it reaches the narrowing 25. Thereupon, the end 7a, 7b is slid a bit further, so that the marking 39 on the coupling piece 23 is between the markings 40, 40' on the housing 21. The axial displacement of the coupling piece 23 is then such that the force exerted by the spring 26 is in a range including defined forces that are sufficient for effecting a sealing connection between the end 7a, 7b of the gas chromatography column and the coupling piece 23 without this entailing any risk of damage to the end 7a, 7b of the gas chromatography column. Thereafter, the nut 34 of the clamp fitting 32 can be tightened, so that a fixed connection between the clamp fitting 32 and the end 7a, 7b of the gas chromatography column 7 is effected. This fixed connection is broken again only when the end 7a, 7b is damaged and needs to be cut off straight again, requiring the projecting length to be set again.

It will be clear that the invention is not limited to the exemplary embodiment described but that various alterations are possible within the framework of the invention. Thus, the rapid-coupling sealing connections can be fitted, for instance, on a drawer capable of riding out of the oven chamber. This drawer may at the same time serve to carry the gas chromatography columns.

## Claims

1. An assembly for placing a capillary gas chromatography column (7) in a gas chromatograph (1) for forming a connection of an input end (7a) of the capillary gas chromatography column (7) with an injector (5) of the gas chromatograph (1) and for forming a connection of an output end (7b) of the capillary gas chromatography column (7) with a detector (6) of the gas chromatograph (1), said assembly comprising a first and a second rapid-coupling sealing connection (20, 20') and a first and a second capillary connecting duct (11, 11'), the first rapid-coupling sealing connection (20) being intended for connecting therewith an input end (7a) of a capillary gas chromatography column (7), and the second rapid-coupling sealing connection (20') being intended for connecting therewith an output end (7b) of a capillary gas chromatography column (7), while the first capillary connecting duct (11) connects the first rapid-coupling sealing connection (20) with the injector (5), and the second capillary connecting duct (11') connects the second rapid-coupling sealing connection (20') with the detector (6).

2. An assembly according to claim 1, characterized in that each rapid-coupling sealing connection (20) comprises a housing (21) having a housing bore (22), in which housing bore (22) a coupling piece (23) is received, which is provided with a coupling piece bore (24) which is concentric relative to the housing bore (22), while in the coupling piece bore (24) a narrowing (25) is provided, the transition in diameter of the coupling piece bore (24) towards the narrowing (25) being continuous, viewed from both sides of the narrowing (25), the diameter of the coupling piece bore (24) being greater than the diameter of a capillary gas chromatography column (7) and of a said capillary connecting duct (11), the diameter of the narrowing (25) being smaller than the outside diameter of a capillary gas chromatography column (7) and a said capillary connecting duct (11), while the coupling piece (23) is arranged for movement in axial direction, and each rapid-coupling sealing connection comprises a spring element (26) which pushes the coupling piece (23) in the direction of a gas chromatography column insertion end (21a) of the housing (21) into an extreme position and which, under the influence of a force exerted by the input end (7a) or output end (7b) of the gas chromatography column (7) on the coupling piece, allows displacement of the coupling piece (23) in axial direction.

3. An assembly according to claim 2, characterized in that each rapid-coupling sealing connection (20), on a side thereof which, relative to the coupling piece (23), is proximal to the gas chromatography column insertion end (21a) of the housing (21), comprises a sealing element (27) which is slidably received in a sealing element bore (28) which intersects the housing bore (22), the sealing element (27) being provided with a recess (29), the sealing element (27) being arranged for assuming a sealing position in which the housing bore (22) is closed off and for assuming a connecting position in which the recess (29) of the sealing element (27) is in line with the housing bore (22), so that the housing bore (22) is not closed off, while the sealing element (27) is biased into the sealing position with a spring (30), and each rapid-coupling sealing connection (20) comprises operating means (31) for bringing the sealing element (27) from the sealing position into the connecting position.

4. An assembly according to claim 3, characterized in that each rapid-coupling sealing connection (20) comprises, at the gas chromatography column insertion end (21a), a clamp fitting (32) which is provided with at least a fitting part (33), a nut (34) and a ferrule (35), each provided with a bore which in mounted condition is concentric with respect to the housing bore (22), the fitting part (33) comprising a tube part (36) which in mounted condition extends into the housing bore (22) and is engaged by the sealing element (27).

5. An assembly according to claim 4, characterized in that each rapid-coupling sealing connection (20) comprises a locking nut (37) for locking a clamp fitting (32) mounted on the housing (21).

6. An assembly according to any one of claims 2 to 5, characterized in that the housing (21) comprises a window (38) through which the coupling piece (23) is visible, so that the axial displacement of the coupling piece (23) is visible.

7. An assembly according to claim 6, characterized in that both the coupling piece (23) and the housing (21) are provided with markings (39 and 40, 40', respectively), which indicate whether in mounting the gas chromatography column (7) sufficient axial displacement of the coupling piece (23) has occurred.

8. An assembly according to any one of the preceding claims, characterized in that in the housing (21) a rinsing bore (41) is provided which terminates in the housing bore (22), while adjacent a free connecting end of the rinsing bore (41), a clamp fitting (42) is provided, which clamp fitting (42) comprises a fitting part (43), a ferrule (44) and a nut (45).

9. An assembly according to any one of claims 2 to 8, characterized in that each rapid-coupling sealing connection (20), adjacent a connecting duct insertion end (21b) thereof, comprises a connecting duct retaining element (12), which is arranged to pass a flexibly designed capillary connecting duct (11) via a bend (11b) of a desired contour to the connecting duct insertion end (21b), such that the free end (11c) of the connecting duct (11) which extends into the housing bore (22) is pushed with a force defined by the flexibility of the connecting duct (11) and the bend contour (11b) into the narrowing (25) of the coupling piece (23).

10. An assembly according to any one of the preceding claims, characterized in that each connecting duct (11), adjacent the end (lla) thereof to be connected to the injector (5) or detector (6), is provided with at least a ferrule (47) .

11. An assembly according to any one of the preceding claims, characterized in that each connecting duct (11) has a length such that each rapid-coupling sealing connection (20, 20') can be moved out of the gas chromatograph, without the corresponding connecting duct (11) needing to be uncoupled from the rapid-coupling sealing connections (20, 20') and/or the detector (5) and injector (6), respectively.

12. A gas chromatograph (1) comprising a housing (2) with an oven chamber (3), the housing (2) comprising a door (4) closing off an opening in the housing (2), which opening provides access to the oven chamber (3), the gas chromatograph (1) further comprising at least one injector (5) and at least one detector (6), characterized by at least one assembly according to any one of the preceding claims.

13. A gas chromatograph according to claim 12, characterized in that the rapid-coupling sealing connections (20) of the or each assembly are arranged on a frame (10) which is movable out of the oven chamber (3).

14. A gas chromatograph according to claim 13, characterized in that the frame is formed by a drawer capable of riding out of the oven chamber (3).

15. A gas chromatograph according to claim 13, characterized in that the frame (10) is connected with the oven door (4).

16. A capillary connecting duct intended for an assembly according to any one of claims 1 to 11, comprising at least a ferrule (47) which is fixedly mounted at a defined distance from an end (lla) of the capillary connecting duct (11).

17. A capillary connecting duct according to claim 16, characterized in that it is packaged in a gas-tight glass tube (49) with closed ends, which glass tube (49) is provided with a breaking edge (50) along which the tube (49) can be controllably broken.
